Europäisches Patentamt

(19) European Patent Office

Office européen des brevets

(11) Numéro de publication : **0 300 875 B1**

(12) **FASCICULE DE BREVET EUROPEEN**

(45) Date de publication du fascicule du brevet :
**12.06.91 Bulletin 91/24**

(51) Int. Cl.$^5$ : **G01N 15/02**

(21) Numéro de dépôt : **88401795.5**

(22) Date de dépôt : **08.07.88**

(54) **Procédé et dispositifs de granulométrie optique pour de larges gammes de mesure.**

(30) Priorité : **10.07.87 FR 8709785**

(43) Date de publication de la demande :
**25.01.89 Bulletin 89/04**

(45) Mention de la délivrance du brevet :
**12.06.91 Bulletin 91/24**

(84) Etats contractants désignés :
**DE GB**

(56) Documents cités :
**PROCEEDINGS OF THE IECON '84, 22-26 octobre 1984, Tokyo, vol. 2, pages 1070-1075, IEEE, New York, US; K. TATSUNO: "Development of an optical fiber droplet sizer"**
**APPLIED OPTICS, vol. 19, no. 20, 15 octobre 1980, pages 3441-3448, New York, US; M.Z. HANSEN: "Atmospheric particulate analysis using angular light scattering"**
**APPLIED OPTICS, vol. 18, no. 20, 15 octobre 1979, pages 3494-3500, New York, US; T.W. ALGER:**
**"Polydisperse-particle-size-distribution function determined from intensity profile of angularly scattered light"**

(73) Titulaire : **OFFICE NATIONAL D'ETUDES ET DE RECHERCHES AEROSPATIALES(O.N.E.R.A.)**
**Etablissement Public de l'Etat 29 avenue de la Divison Leclerc**
**F-92320 Châtillon (FR)**

(72) Inventeur : **Delfour, André**
**4, Avenue de Karben**
**F-31520 Ramonville (FR)**
Inventeur : **Falempin, François**
**11 rue du Chemin de Fer**
**F-91240 St. Michel Sur Orge (FR)**
Inventeur : **Isbert, Jacques**
**25, rue St. Hippolyte**
**F-31300 Toulouse (FR)**
Inventeur : **Sans, Claude**
**Chemin du Trou de l'Hotel**
**F-91300 Massy (FR)**

(74) Mandataire : **Martinet & Lapoux**
**BP 405**
**F-78055 St. Quentin en Yvelines Cédex (FR)**

Jouve, 18, rue Saint-Denis, 75001 PARIS

EP 0 300 875 B1

## Description

La présente invention concerne de manière générale le domaine de la granulométrie. Plus particulièrement, l'invention concerne un procédé et des dispositifs de granulométrie pour la mesure par voie optique de tailles et de concentrations de particules en suspension dans un fluide gazeux ou liquide.

Actuellement dans le domaine de la granulométrie, des appareils de mesure les plus performants font appel à des procédés de mesure par voie optique. Les appareils existants sont de deux types. A un premier type appartiennent des appareils de comptage nécessitant la présence d'une seule particule à la fois dans un volume de mesure. A un second type appartiennent des appareils analysant par échantillonnage la diffusion lumineuse d'un volume-échantillon éclairé d'un nuage de particules afin de déterminer une fonction de distribution en taille des particules dans le nuage.

Les appareils du premier type, tels que les appareils dits de KNOLLENBERG, utilisent les propriétés de diffusion de la lumière par une seule particule. Leur principal inconvénient réside dans la nécessité de la présence d'une seule particule à la fois dans le volume de mesure. Ces appareils ont de ce fait des performances limitées et ne couvrent qu'une gamme de mesure de taille bien définie.

Les appareils du second type utilisent l'approximation de FRAUNHOFFER ou la théorie de LORENZ-MIE permettant de calculer la diffusion lumineuse d'un nuage de particules. Leur domaine d'utilisation est limité à une gamme de mesure de concentration volumique comprise entre $10^{-9}$ et $10^{-5}$. La gamme de mesure de taille dépend du modèle théorique de diffusion utilisé.

Les principaux appareils du second type disponibles actuellement sur le marché sont les appareils commercialisés sous la marque MALVERN (marque déposée). Ces appareils font appel à l'approximation de FRAUNHOFFER. L'article de E.D. HIRLEMAN et L.G. DODGE intitulé "Performance comparison of Malvern instruments laser diffraction drop size analyzers" et publié dans la 3e "International Conference on Liquid Atomisation and Spray Systems" (ICLASS 85), pages IVA/3/1 à IVA/3/14, Institut of Energy -London 1985- fait état de leurs performances.

La distribution en taille des particules n'est considérée très bien estimée par les appareils MALVERN que pour des particules ayant un diamètre au-dessus de 5 µm. De plus, un inconvénient important de ces appareils est leur manque de précision dès que la fonction de distribution à mesurer n'est pas modélisable par une fonction simple de type ROSIN-RAMMLER ou log-normal. Ce manque de précision est dû au procédé de calcul de la fonction de distribution faisant appel à une inversion matricielle et une estimation par la méthode des moindres carrés entraînant un résultat instable.

Par ailleurs, les différents appareils existants ont une forme et un encombrement qui ne conviennent pas pour mesurer les tailles et les concentrations de particules dans un écoulement d'un fluide. En effet, une forme non adaptée et un encombrement trop important perturbent l'écoulement du fluide et modifient les mesures. Ces appareils sont inadaptés pour être portés par un véhicule en déplacement, par exemple par un aéronef afin de déterminer la distribution en taille de gouttes d'eau en suspension dans l'air.

L'invention vise principalement à fournir un procédé et des dispositifs de granulométrie afin d'améliorer les performances obtenues par les dispositifs selon l'art antérieur. L'invention vise également à fournir des dispositifs de granulométrie adaptés pour déterminer la distribution en taille de particules dans un écoulement d'un fluide.

A cette fin, le procédé selon l'invention pour évaluer la distribution en taille de particules dans un fluide à partir de la mesure du rayonnement diffusé dans un nombre entier fini P de directions prédéterminées de l'espace par un échantillon de fluide éclairé par un faisceau lumineux incident, est caractérisé en ce qu'à partir d'un vecteur de mesure de rayonnement ayant pour composantes des rayonnements moyens, dans les P directions, déterminés à la suite de plusieurs mesures successives et d'une matrice de coefficients théoriques de rayonnement, est calculée une première estimation de la distribution exprimée par une première fonction discrète de distribution contenue dans une fonction mathématique d'enveloppe de type prédéterminé et fixant respectivement des valeurs de concentration à des noeuds de taille pour lesquels ladite première fonction est définie, les noeuds de taille étant répartis de manière à satisfaire à une relation récursive de type prédéterminé, et en ce que cette première fonction est prise comme donnée de départ pour déterminer, par un calcul itératif faisant intervenir des filtrages numériques, une relation récursive optimale à laquelle doivent satisfaire les noeuds d'une fonction discrète de distribution pour être répartis de telle manière que ladite fonction discrète de distribution présente une corrélation maximale avec une fonction discrète d'incertitude de mesure découlant de plusieurs mesures de rayonnement successives dans les P directions, toutes les fonctions discrètes de distribution compatibles avec les incertitudes de mesure et donc les noeuds satisfont à ladite relation successive optimale étant ensuite calculées à partir du vecteur et de la matrice pour en déduire une évaluation statistique optimale de la distribution recherchée.

Un dispositif pour la mise en oeuvre du procédé selon l'invention est caractérisé en ce qu'il comprend :

2

des moyens pour produire un faisceau lumineux destiné à éclairer l'échantillon,

des moyens pour mesurer le rayonnement diffusé dans les P directions de l'espace,

des moyens pour convertir sous une forme numérique des mesures de rayonnement fournies par les moyens pour mesurer,

des moyens mémorisant un programme et la matrice de coefficients de rayonnement pour traiter les mesures numériques de rayonnement et pour calculer ladite évaluation statistique optimale de la distribution recherchée, et

des moyens pour visualiser l'évaluation calculée.

Selon d'autres aspects de l'invention, dans un dispositif pour évaluer la distribution en taille de particules dans un écoulement d'un fluide, les moyens pour produire, les moyens pour mesurer, et les moyens pour convertir sont inclus dans une sonde de mesure du dispositif. La sonde de mesure comprend également des moyens pour prélever une partie de l'écoulement et le conduire dans la sonde, et des moyens de réflexion optique pour diriger le faisceau lumineux produit par les moyens pour produire vers l'échantillon et les rayonnements diffusés par l'échantillon vers les moyens pour mesurer, les moyens pour produire et les moyens pour mesurer étant éloignés de l'échantillon, en aval de celui-ci dans le sens de l'écoulement, afin de donner à la sonde une forme prédéterminée ne perturbant pas l'écoulement à analyser au voisinage de l'échantillon.

Le procédé selon l'invention autorise des performances élevées. La gamme de mesure en taille est de 0,1 μm à 300 μm. La gamme de mesure en concentration volumique est de 0,2 à $8.10^{-6}$. La fonction de distribution est déterminée en temps quasi réel avec une précision meilleure ou égale à 10%.

Les dispositifs de granulométrie selon l'invention sont particulièrement bien adaptés pour être portés par un aéronef ou pour être utilisés dans une soufflerie aérodynamique. Ils permettent la mesure dans un écoulement animé d'une vitesse allant de Mach 0 à Mach 0,9.

En version étanche, un dispositif selon l'invention peut être immergé dans un liquide, tel que de l'eau afin de rechercher des diamètres et concentrations, par exemple de bulles d'air.

D'autres avantages et caractéristiques de l'invention apparaîtront plus clairement à la lecture de la description suivante de plusieurs réalisations préférées d'un dispositif de granulométrie selon le procédé de l'invention en référence aux dessins annexés correspondants dans lesquels :

– la Fig. 1 montre sous une forme shématique fonctionnelle un dispositif de granulométrie selon l'invention;

– la Fig. 2 représente une fonction mathématique utilisée selon le procédé de l'invention afin de modéliser la fonction de distribution en taille recherchée ;

– la Fig. 3 montre l'implantation de différents éléments dans une sonde de mesure comprise dans un dispositif de granulométrie selon l'invention ; et

– la Fig. 4 est une vue en perspective de la sonde de mesure selon l'invention.

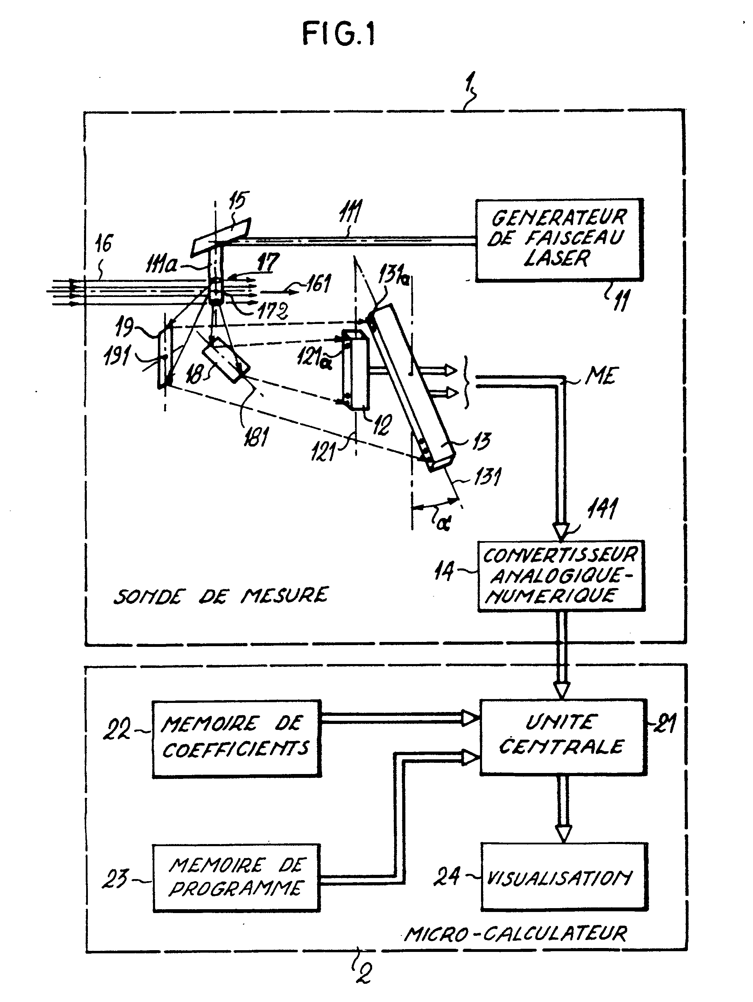

En référence à la Fig. 1, le dispositif selon l'invention est constitué d'une sonde de mesure 1 et d'un microcalculateur 2.

La sonde de mesure 1 comprend essentiellement un générateur de faisceau laser 11, des première et seconde barrettes de mesure de rayonnement 12 et 13, et un convertisseur analogique-numérique 14.

Le générateur de faisceau laser 11, par exemple de type à gaz, fournit un faisceau laser polarisé et expandé 111.

Le faisceau laser 111 est réfléchi par un miroir plan, ou prisme à réflexion totale 15, afin de modifier sa direction de propagation et l'amener à traverser un fluide 16 contenant des particules en suspension de différents diamètres. Le fluide 16 est dirigé dans la sonde 1 suivant une direction d'écoulement prédéterminée 161 et est traversé perpendiculairement par le faisceau laser réfléchi 111a. L'intersection du faisceau 111a et du fluide 16 est un volume 17 sensiblement cylindrique. Le volume 17 constitue un volume de mesure prédéterminé par le choix du diamètre du faisceau laser 111 et par le dimensionnement d'un guide creux semi-circulaire 172 faisant partie d'une platine dans la sonde 1 dirigeant l'écoulement du fluide 16.

Le volume de mesure 17 contient une pluralité de particules sensiblement sphériques de différents diamètres Φ répartis selon une fonction de distribution en taille f(Φ) dont une évaluation est l'objet de la mesure. Chacune des particules dans le volume de mesure 17 constitue un élément diffractant le faisceau laser 111a et diffuse une onde lumineuse de même longueur d'onde que le faisceau laser.

La théorie rigoureuse de LORENZ-MIE permet de calculer pour une quelconque direction donnée de l'espace la quantité différentielle efficace de rayonnement lumineux diffusé dans cette direction par une particule sphérique éclairée par une onde lumineuse. Cette quantité différentielle est fonction d'un indice de réfraction complexe m de la particule et de son diamètre Φ.

Pour un nuage de particules, le rayonnement lumineux efficace diffusé par ce nuage dans une direction d de l'espace est égal, à l'infini, à la somme des quantités différentielles diffusées dans la même direction d par les différentes particules constituant le nuage. Le rayonnement lumineux diffusé par un nuage de particules dans une direction d de l'espace est donnée par l'équation intégrale :

$$b(d) = \int_{\Phi \text{ mini}}^{\Phi \text{ maxi}} K(d,\Phi,m) \cdot f(\Phi) \cdot d\Phi \quad ,$$

où b(d) est le rayonnement lumineux efficace diffusé par le nuage dans la direction d, $f(\Phi)$ est la fonction de distribution en taille du nuage, K(d, $\Phi$, m) est une fonction de rayonnement selon la théorie de LORENZ-MIE donnant pour chacune des particules du nuage, définie par son diamètre $\Phi$ et son indice de réfraction m, la quantité différentielle de rayonnement lumineux qu'elle diffuse dans la direction d, et où $\Phi_{\text{mini}}$ et $\Phi_{\text{maxi}}$ définissent un intervalle de diamètres dans lequel est compris le diamètre $\Phi$ d'une particule quelconque du nuage.

Les barrettes de mesure de rayonnement 12 et 13 sont éclairées par le rayonnement diffusé par le volume de mesure 17. Des miroirs plans de renvoi, ou prismes, 18 et 19 respectivement associés aux barrettes 12 et 13 sont prévus dans la sonde 1 afin de réfléchir vers les barrettes 12 et 13 des parties du rayonnement diffusé par le volume 17. Le miroir 18 est disposé à l'opposé du miroir 15, par rapport à la direction d'écoulement 161 du fluide 16, et reçoit une partie du rayonnement diffusé par le volume de mesure 17, observée suivant la direction de propagation du faisceau laser 111a, direction de propagation perpendiculaire au plan de polarisation du faisceau. La barrette 12 est alignée suivant un axe 121 parallèle à la direction de propagation du faisceau laser 111a et est orientée pour être éclairée par le rayonnement réfléchi par le miroir 18. Le miroir 19 est placé perpendiculairement au plan de polarisation du faisceau 111a et reçoit le rayonnement diffusé par le volume de mesure 17 et observé suivant une direction perpendiculaire à la direction de propagation du faisceau 111a. La barrette 13 est alignée suivant un axe 131 incliné d'un angle prédéterminé $\alpha$ par rapport à la direction de propagation du faisceau laser 111a afin de permettre un nombre plus élevé de mesures. La barrette 13 est orientée vers le miroir 19 et est éclairée par le rayonnement réfléchi par le miroir 19.

Les barrettes 12 et 13 comprennent respectivement des pluralités de cellules photosensibles telles que phototransistors, alignées, 121a et 131a, constituant autant de récepteurs de mesure de rayonnement. Les barrettes 12 et 13 mesurent le rayonnement diffusé par le volume de mesure 17 suivant respectivement des premier et second groupes de directions de mesure d compris respectivement dans des premier et second plans de mesure. Le premier plan de mesure correspondant à la barrette 12 est perpendiculaire au plan de polarisation du faisceau laser 111a et passe par l'axe 121 de la barrette 12 et un axe de symétrie 181 du miroir 18. Le second plan de mesure passe par des centres de symétrie 191 et 171 respectivement du miroir 19 et du volume de mesure 17 et est incliné de l'angle $\alpha$ par rapport à un plan passant par les mêmes centres de symétrie 191 et 171 et perpendiculaire au plan de polarisation du faisceau laser 111a.

Les barrettes de mesure 12 et 13 fournissent des vecteurs de mesure ME constitués chacun par P, typiquement égal à 32, mesures respectivement dans P directions différentes $d_1$ à $d_P$ comprises dans les premier et second plans de mesure.

Le convertisseur analogique-numérique 14 reçoit à des entrées parallèles 141 les vecteurs de mesure ME et les délivre sous forme numérique au micro-calculateur 2.

Le micro-calculateur 2 comprend une unité de traitement centrale 21, une mémoire de coefficients 22, une mémoire de programme 23, et des moyens de visualisation 24.

L'unité centrale 21 reçoit les vecteurs de mesure ME fournis par le convertisseur 14 de la sonde 1 et les traite en utilisant des coefficients mémorisés dans la mémoire 22 selon un programme de calcul et de traitement mémorisé dans la mémoire 23, afin de déterminer la fonction de distribution en taille $f(\phi)$ des particules contenues dans le volume de mesure 17.

De manière générale, les fonctions de distribution en taille réelles ont des formes d'onde naturelles connues et l'on peut considérer qu'une fonction de distribution en taille quelconque à déterminer est modélisable par une somme de fonctions mathématiques de type analogue. Selon le procédé de l'invention, l'on tient pour acquis qu'une fonction de distribution en taille d'un nuage de particules est modélisable par une somme de fonctions mathématiques exponentielles connues de type B-spline. Ces fonctions sont définies par des produits de convolution de fonction créneau et sont représentées par des courbes monotones avec une dérivée seconde minimale ; leur valeur est nulle à l'extérieur de l'intervalle compris entre les premier et cinquième noeuds. La fonction de distribution $f(\phi)$ recherchée peut être exprimée par l'égalité suivante :

$$f(\phi) = \sum_{j=1}^{j=J} a_j \cdot S_j(\phi) \quad ,$$

où j est un indice entier variant entre 1 et une valeur maximale J. Les fonctions $S_j(\phi)$ sont des fonctions B-splines, et les coefficients multiplicatif $a_j$ sont des coefficients réels positifs respectivement associés aux fonctions $S_j(\phi)$.

La mémoire 22 mémorise une matrice de coefficients T comprenant P.Q coefficients, $t_{11}$ à $t_{PQ}$, où Q est un entier prédéterminé de valeur élevée typiquement égale à 150. Les coefficients t de la matrice T sont déterminés théoriquement par application de la théorie de LORENZ-MIE.

Un coefficient $t_{pq}$ de la matrice T, où p et q sont des entiers compris respectivement entre 1 et P, et 1 et Q, représente un poids de rayonnement dans la direction $d_p$ d'une particule ayant un diamètre $\phi_q$.

La matrice T est calculée à l'aide d'un programme de calcul implanté à cet effet dans la mémoire de programme 23 du micro-calculateur 2, pour un indice de réfraction m donné et correspondant à la nature du nuage de particules. La matrice T représente sous une forme discrète la relation qui lie le rayonnement b diffusé dans l'espace par le volume de mesure 17 à la fonction de distribution en taille $f(\phi)$ des particules incluses dans le volume de mesure 17.

L'égalité suivante peut être exprimée :

$$B = T.F,$$

où B est un vecteur de rayonnement ayant P = 32 composantes $b_1$ à $b_p$ représentant respectivement des rayonnements diffusés par le volume de mesure 17 dans les P = 32 directions $d_1$ à $d_P$ dans les premier et second plans de mesure, et F est un vecteur représentant une forme discrète de la fonction de distribution $f(\phi)$ et ayant Q = 150 composantes $f_1$ à $f_Q$, respectivement égales aux Q = 150 concentrations respectives de Q = 150 particules de diamètres différents dans le volume de mesure 17.

De l'égalité ci-dessus, il découle qu'il est possible de calculer le vecteur F représentant une nouvelle forme discrète de la fonction de distribution $f(\phi)$ et ayant au maximum J = 31 composantes, où J est un entier prédéterminé, connaissant le vecteur B et en inversant une forme dégénérée U de la matrice T.

L'unité 21 calcule à partir de plusieurs vecteurs de mesure ME successifs fournis par la sonde 1 et à l'aide d'une table de coefficients de correction une estimation statistique du vecteur B. Chacune des cellules 121a, 131a des barrettes 12 et 13 ayant une courbe de réponse spécifique, la table de coefficient de correction contient des coefficients à appliquer aux mesures fournies par les cellules 121a, 131a afin de déterminer des rayonnements correspondants. Un vecteur moyen de rayonnement Bm et un vecteur d'écarts types correspondant σB sont calculés par l'unité 21. Les vecteurs Bm et σB comprennent chacun P = 32 composantes respectivement $bm_1$ à $bm_P$ et $\sigma b_1$ à $\sigma b_P$.

A partir du vecteur moyen Bm et de la matrice U, l'unité centrale 21 détermine un vecteur $Fa_0$ qualifiant une distribution et représentant les coefficients $a_j$ correspondants des J = 31 fonctions B-spline cubiques dont les noeuds $\phi_{11}$ à $\phi_{JN}$ sont définis à l'origine par les relations suivantes :

$$\phi_{11} = \phi_{mini},$$
$$\phi_{JN} = \phi_{maxi},$$
$$\phi_{j,n+1} = C.\phi_{j,n}, \text{ et}$$
$$\phi_{j+1,n} = C.\phi_{j,n},$$

où $\phi_{mini}$ et $\phi_{maxi}$ sont des valeurs prédéterminées délimitant un intervalle dans lequel sont comprises toutes les valeurs des noeuds, où n et j sont des entiers variant respectivement entre 1 et N, et 1 et J, et où C est un coefficient multiplicatif ayant une valeur $C_0$ pour le vecteur $Fa_0$.

La matrice T comprenant P.Q coefficients est transformée en la matrice U comprenant P.J coefficients u calculés à partir de la relation :

$$u_{pj} = \int_{\phi_{j1}}^{\phi_{jN}} K(d,\phi,m) \cdot S_j(\phi) \cdot d\phi .$$

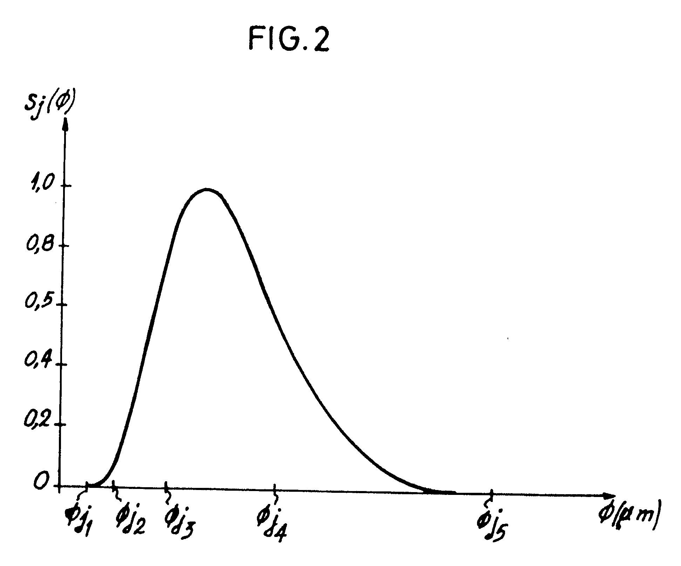

Une fonction $S_j(\phi)$ est montrée fig. 2 ; $S_j(\phi)$ est définie à partir d'un nombre typique de noeuds N égal à 5. Le calcul du vecteur $Fa_0$ à partir du vecteur Bm et de la matrice U est réalisé selon des procédés d'inversion statistique classiques dans l'art antérieur et connus par l'homme du métier. Le vecteur $Fa_0$ peut être une solution optimale déterminée par le calcul d'un écart quadratique moyen minimum par rapport à une solution mathématique exacte égale à $Bm.U^{-1}$. Le vecteur de distribution modélisée $Fa_0$ ainsi calculé est une solution instable. Le coefficient multiplicatif C entre les noeuds du vecteur $Fa_0$ a une valeur calculée $C_0$ qui peut être optimisée afin de définir le vecteur $Fa_0$ par des noeuds pour lesquels le vecteur $Fa_0$ est corrélé de manière maximale avec un vecteur d'incertitudes de mesure.

Selon le procédé de l'invention, un filtrage numérique est réalisé pour déterminer une valeur optimale Copt du coefficient multiplicatif C. Plusieurs produits de convolution $PC_{01}$, $PC_{02}$, ...$PC_{0l}$, où l est un entier prédéterminé, sont calculés entre un vecteur d'écarts types $\sigma F = U^{-1}.\sigma B$ et respectivement plusieurs vecteurs $Fa_{01}$, $Fa_{02}$,...$Fa_{0l}$. Les vecteurs $Fa_{01}$ à $Fa_{0l}$ sont déduits du vecteur $Fa_0$ par variation du coefficient multiplicatif C autour de la valeur $C_0$. Aux vecteurs $Fa_{01}$ à $Fa_{0l}$ correspondent respectivement des valeurs $C_{11}$ à $C_{1l}$ autour de la valeur $C_0$ du coefficient multiplicatif C. Parmi les produits de convolution $PC_{01}$ à $PC_{0l}$ correspondant respectivement aux valeurs $C_{11}$ à $C_{1l}$ du coefficient multiplicatif C, un produit de convolution a une valeur maximale. A ce produit de convolution de valeur maximale correspond respectivement une valeur $C_1$ du coefficient multiplicatif C. La valeur $C_1$ du coefficient multiplicatif C est une valeur optimale intermédiaire à laquelle correspond un vecteur $Fa_1$ parmi les vecteurs $Fa_{01}$ à $Fa_{0l}$.

Dans le cas où la valeur $C_1$ est supérieure ou égale à la valeur $C_0$ du coefficient multiplicatif C, le vecteur $Fa_1$ est légitimement interpolé du vecteur $Fa_0$, car il comprend un nombre de composantes, correspondant aux noeuds des fonctions B-splines, au plus égal à celui du vecteur $Fa_0$ et ne porte donc que des informations contenues déjà initialement dans le vecteur $Fa_0$. En d'autres termes, le spectre de fréquence de la fonction discrète correspondant au vecteur $Fa_1$ est inclus dans le spectre de fréquence de la fonction discrète correspondant au vecteur $Fa_0$. La valeur $C_1$ est dans ce cas la valeur optimale recherchée Copt du coefficient multiplicatif C.

Dans le cas où la valeur $C_1$ est inférieure à la valeur $C_0$ du coefficient multiplicatif C, le vecteur $Fa_1$ comprend un nombre de composantes supérieur au vecteur $Fa_0$ et n'est pas une interpolation légitime du vecteur $Fa_0$. Un autre vecteur de distribution modélisée $Fb_0$, représentant la fonction $f(\phi)$ et dont les composantes correspondent à des noeuds de fonctions B-spline liées par la valeur $C_1$ du coefficient multiplicatif C est calculé par l'unité centrale 21 à partir du vecteur moyen Bm et de la matrice U, par inversion statistique. Le vecteur $Fb_0$ est ensuite traité de manière analogue au vecteur $Fa_0$.

La détermination de la valeur optimale Copt du coefficient multiplicatif C nécessite un processus de calcul itératif, comme décrit ci-dessus. En pratique la valeur Copt est typiquement obtenue après deux ou au maximum trois itérations.

La valeur optimale Copt du coefficient multiplicatif C étant déterminée, l'unité centrale 21 calcule, par inversion statistique et décalage des noeuds des fonctions B-splines, tous les vecteurs de distribution F définis à partir de la valeur Copt du coefficient multiplicatif C et compatibles avec les vecteurs Bm et $\sigma B$. Un vecteur optimum $F_{opt}$ parmi tous les vecteurs F présente un écart quadratique moyen minimum par rapport à la solution moyenne $U^{-1}.Bm$. Le vecteur $F_{opt}$ représente de manière optimale la fonction de distribution en taille $f(\phi)$ des particules dans le volume 17.

L'unité centrale 21 fournit le résultat des calculs aux moyens de visualisation 24. La fonction modélisée $f(\phi)$ peut également être visualisée sous une forme statistique calculée à partir de tous les vecteurs F.

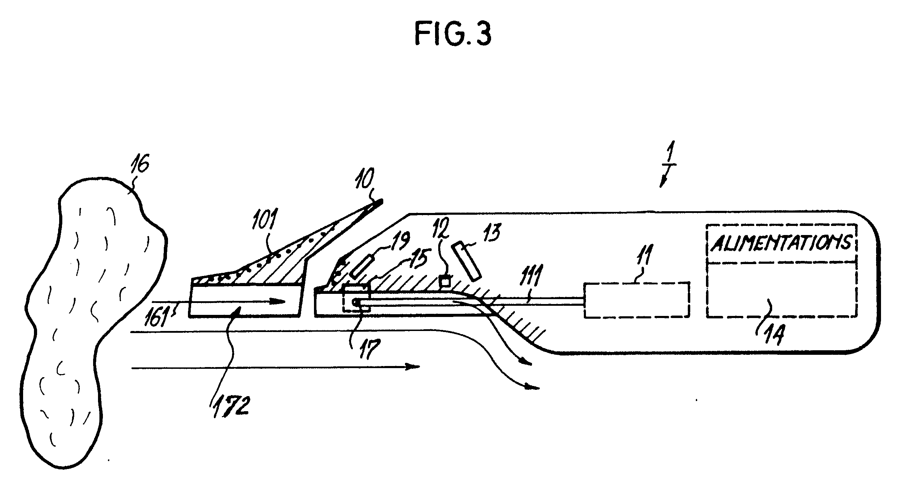

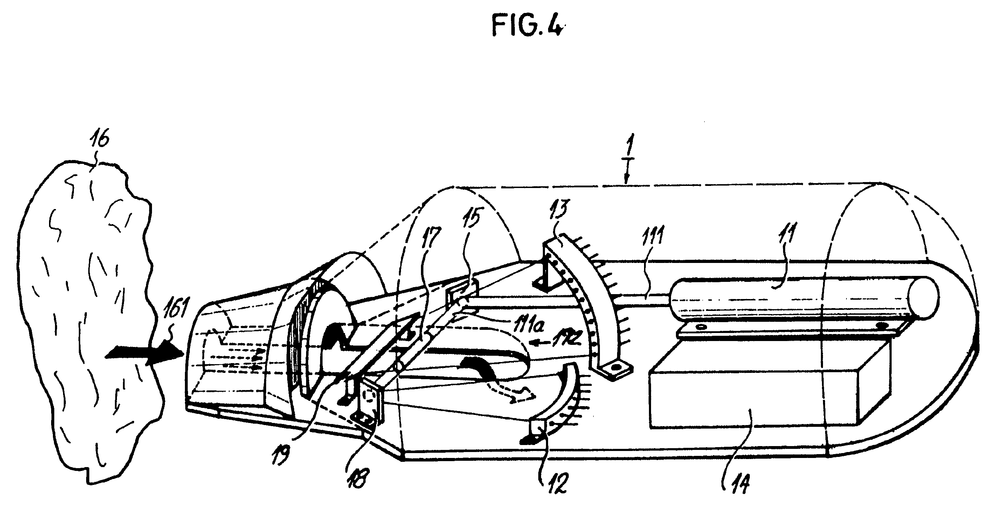

Les miroirs 15, 18 et 19 sont prévus dans la sonde de mesure 1 afin de permettre un positionnement convenable, montré Figs. 3 et 4, du générateur de faisceau laser 11, des barettes 12 et 13, du convertisseur 14, et d'alimentations respectives, non représentées à la Fig. 1. Ces différents éléments sont positionnés en aval, selon la direction d'écoulement 161 du fluide 16, du point de mesure matérialisé par le volume 17 afin de ne pas perturber l'écoulement du fluide à mesurer.

Tous les éléments de la sonde de mesure sont solidaires d'une platine capotée. Cette platine est conçue de manière à amener l'écoulement du fluide à angle droit du faisceau laser par le guide creux semi-circulaire 172, sans pour autant le canaliser ce qui créerait des risques de détérioration des dimensions des particules ou gouttes par modification des caractéristiques de l'écoulement. Dans un même but, un déflecteur 10, montré à la Fig. 3, équipé d'un piège à couche limite, est placé à l'avant de la sonde 1 afin de minimiser les perturbations qu'engendrerait la présence de celle-ci au sein de l'écoulement à analyser. La sonde 1 étant destinée à fonctionner dans des conditions de températures variables, le déflecteur 10 est muni d'éléments chauffants 101, tels que des résistances, assurant l'intégrité de sa forme lors de variations de température.

## Revendications

1. Procédé pour évaluer la distribution en taille de particules dans un fluide à partir de la mesure du rayonnement diffusé dans un nombre entier fini P de directions prédéterminées de l'espace ($d_1$ à $d_P$) par un échantillon de fluide (17) éclairé par un faisceau lumineux incident (111a), caractérisé en ce qu'à partir d'un vecteur de mesure de rayonnement (Bm) ayant pour composantes des rayonnements moyens ($bm_1$ à $bm_P$) dans les P directions déterminées à la suite de plusieurs mesures successives et à partir d'une matrice de coefficients théoriques de rayonnement (U) est calculée une première estimation de la distribution exprimée par une première fonction discrète de distribution ($Fa_0$) contenue dans une fonction mathématique d'enveloppe ($\Sigma a_j.S_j(\phi)$)

de type prédéterminé et fixant respectivement des valeurs de concentration à des noeuds de taille ($\phi_{11}$ à $\phi_{JN}$) pour lesquels ladite première fonction est définie, les noeuds de taille ($\phi_{11}$ à $\phi_{JN}$) étant répartis de manière à satisfaire à une relation récursive ($\phi_{j,n+1} = C.\phi_{jn}$ et $\phi_{j+1,n} = C\phi_{jn}$) de type prédéterminé, et en ce que cette première fonction est prise comme donnée de départ pour déterminer par un calcul itératif faisant intervenir des filtrages numériques une relation récursive optimale (Copt) à laquelle doivent satisfaire les noeuds ($\phi_{11}$ à $\phi_{JN}$) d'une fonction discrète de distribution (F) pour être répartis de telle manière que ladite fonction discrète de distribution (F) présente une corrélation maximale avec une fonction discrète d'incertitude de mesure ($\sigma B.U^{-1}$) découlant de plusieurs mesures de rayonnement successives dans les P directions, toutes les fonctions discrètes de distribution (F) compatibles avec les incertitudes de mesure ($\sigma B.U^{-1}$) et dont les noeuds ($\phi_{11}$ à $\phi_{JN}$) satisfont à ladite relation récursive optimale ($C_{opt}$) étant ensuite calculées à partir du vecteur de mesure (Bm) et de la matrice (U) pour en déduire une évaluation statistique optimale de la distribution recherchée.

2. Procédé conforme à la revendication 1, caractérisé en ce que les coefficients de rayonnement ($u_{11}$ à $u_{PQ}$) de ladite matrice (U) sont déterminés à partir de la théorie de LORENZ-MIE.

3. Procédé conforme à la revendication 1 ou 2, caractérisé en ce que ladite fonction mathématique d'enveloppe est une somme de fonctions mathématiques de type B-spline ($\Sigma a_j.S_j(\phi)$).

4. Procédé conforme à la revendication 1 ou 3, caractérisé en ce que ladite relation récursive lie deux noeuds successifs quelconques ($\phi_{j,n+1}$, $\phi_{jn}$) d'une fonction discrète de distribution (F) par un coefficient multiplicatif.

5. Dispositif pour la mise en oeuvre du procédé selon l'une quelconque des revendications 1 à 4, caractérisé en ce qu'il comprend
des moyens (11) pour produire un faisceau lumineux destiné à éclairer l'échantillon (17),
des moyens (12, 13) pour mesurer le rayonnement diffusé dans les P directions ($d_1$ à $d_P$) de l'espace,
des moyens (14) pour convertir sous une forme numérique des mesures de rayonnement (ME) fournies par les moyens pour mesurer (12, 13),
des moyens (2) mémorisant un programme (23) et la matrice de coefficients de rayonnement (22) pour traiter les mesures numériques de rayonnement et pour calculer ladite évaluation statistique optimale de la distribution recherchée, et
des moyens (24) pour visualiser l'évaluation calculée.

6. Dispositif conforme à la revendication 5, caractérisé en ce que les moyens pour produire (11) sont un générateur de faisceau laser.

7. Dispositif conforme à la revendication 5 ou 6, caractérisé en ce que les moyens pour mesurer (12, 13) sont des barrettes de mesure constituées chacune d'une pluralité d'éléments de mesure alignés tels que des cellules photoélectriques ou des phototransistors.

8. Dispositif conforme à la revendication 5 ou 7, caractérisé en ce que lesdits moyens pour traiter et calculer (2) sont un micro-calculateur.

9. Dispositif conforme à l'une quelconque des revendications 5 à 9, caractérisé en ce que les moyens pour produire (11), les moyens pour mesurer (13), et les moyens pour convertir (14) sont inclus dans une sonde de mesure (1) du dispositif.

10. Dispositif pour évaluer la distribution en taille de particules dans un écoulement d'un fluide (16) conforme à la revendication 9, caractérisé en ce que ladite sonde de mesure (1) comprend également des moyens (10, 172) pour prélever une partie de l'écoulement et le conduire dans la sonde (1), et des moyens de réflexion optique (15, 18, 19) pour diriger le faisceau lumineux (111, 111a) produit par les moyens pour produire (11) vers l'échantillon (17) et les rayonnements diffusés par l'échantillon (17) vers les moyens pour mesurer (12, 13), les moyens pour produire (11) et les moyens pour mesurer (12, 13) étant éloignés de l'échantillon, en aval de celui-ci dans la direction de l'écoulement, afin de donner à la sonde (1) une forme prédéterminée ne perturbant pas l'écoulement à analyser au voisinage de l'échantillon (17).

11. Dispositif conforme à la revendication 10, caractérisé en ce que les moyens pour prélever et conduire comprennent un guide creux semi-circulaire (172) et un déflecteur (10) équipé d'un piège à couche limite, dans ledit déflecteur (10) étant noyées des résistances chauffantes (101) afin d'assurer l'intégrité de sa forme lors de variations de température.

12. Dispositif conforme à la revendication 10 ou 11, caractérisé en ce que les moyens pour diriger comprennent des miroirs plans et/ou des prismes à réflexion totale (15, 18, 19).

## Ansprüche

1. Verfahren zum Berechnen der Größenverteilung von Teilchen in einem Fluid, ausgehend von der Messung der Strahlung, die in einer endlichen ganzen Anzahl P von vorbestimmten Raumrichtungen ($d_1$ bis $d_P$)

durch eine von einem einfallenden Lichtstrahl (111a) beleuchtete Fluidprobe (17) gestreut ist, dadurch **gekennzeichnet,** daß ausgehend von einem Strahlungsmeßvektor (Bm), dessen Komponenten Strahlungsmittelwerte ($bm_1$ bis $bm_p$) in den P vorbestimmten Richtungen nach mehreren aufeinanderfolgen den Messungen sind, und ausgehend von einer Matrix theoretischer Strahlungskoeffizienten (U) eine erste Abschätzung der Verteilung berechnet wird, ausgedrückt durch eine erste diskrete Verteilungsfunktion ($Fa_0$), die in einer mathematischen einhüllenden Funktion ($\Sigma a_j.S_j (\Phi)$) eines vorbestimmten Typs enthalten ist, wobei jeweils Konzentrationswerte auf die Größenknoten ($\Phi_{11}$ bis $\Phi_{JN}$) festgelegt werden, für die die erste Funktion definiert ist, wobei die Größenknoten ($\Phi_{11}$ bis $\Phi_{JN}$) so verteilt werden, daß eine Rekursivbeziehung ($\Phi_{j,n+1} = C.\Phi_{jn}$ und $\Phi_{j+1,n} = C\Phi_{jn}$) vom vorbestimmten Typ erfüllt ist, und daß diese erste Funktion als von Anfang an gegeben genommen wird, um durch eine Iterationsrechnung beim Durchführen numerischer Filtrationen eine optimale Rekursivbeziehung ($C_{opt}$) zu bestimmen, die die Größenknoten ($\Phi_{11}$ bis $\Phi_{JN}$) einer diskreten Verteilungsfunktion (F) erfüllen müssen, um auf eine solche Weise verteilt zu werden, daß die diskrete Verteilungsfunktion (F) eine maximale Korrelation mit einer diskreten Funktion für die Meßunsicherheit ($\sigma B.U^{-1}$) darstellt, die sich aus mehreren aufeinanderfolgenden Strahlungsmessungen in den P Richtungen ableiten läßt, wobei alle diskreten Verteilungsfunktionen (F), die mit den Meßunsicherheiten ($\sigma B.U^{-1}$) verträglich sind und deren Knoten ($\Phi_{11}$ bis $\Phi_{JN}$) die optimale Rekursivbeziehung ($C_{opt}$) erfüllen, schließlich ausgehend von dem Meßvektor (Bm) und der Matrix (U) berechnet werden, um daraus eine optimale statistische Berechnung der gesuchten Verteilung abzuleiten.

2. Verfahren nach Anspruch 1, dadurch **gekennzeichnet,** daß die Strahlungskoeffizienten ($u_{11}$ bis $u_{PQ}$) der Matrix (U) ausgehend von der Theorie von LORENZ-MIE bestimmt werden.

3. Verfahren nach Anspruch 1 oder 2, dadurch **gekennzeichnet,** daß die mathematische einhüllende Funktion eine Summe aus mathematischen Funktionen von B-Spline-Typ ($\Sigma a_j.S_j (\Phi)$) ist.

4. Verfahren nach Anspruch 1 oder 3, dadurch **gekennzeichnet,** daß die Rekursivbedingung zwei beliebige aufeinanderfolgende Knoten ($\Phi_{j,n+1}$, $\Phi_{jn}$) einer diskreten Verteilungsfunktion (F) durch einen mulitiplikativen Koeffizienten verbindet.

5. Vorrichtung zum Durchführen des Verfahrens nach einem der Ansprüche 1 bis 4, dadurch **gekennzeichnet,** daß sie

eine Einrichtung (11) zum Erzeugen eines Lichtstrahles zum Beleuchten der Probe (17),

Einrichtungen (12, 13) zum Messen der in die P Richtungen ($d_1$ bis $d_p$) des Raumes gestreuten Strahlung, eine Einrichtung (14) zum Umwandeln der von den Meßeinrichtungen (12, 13) gelieferten Strahlungsmessungen (ME) in eine numerischen Form,

eine Einrichtung (2) zum Speichern eines Programmes (23) und der Strahlungskoeffizientenmatrix (22) zum Behandeln der numerischen Strahlungsmessungen und zum Berechnen der optimalen statistischen Abschätzung der gesuchten Verteilung und

eine Einrichtung (24) zum Sichtbarmachen der berechneten Abschätzung aufweist.

6. Vorrichtung nach Anspruch 5, dadurch **gekennzeichnet,** daß die Erzeugereinrichtung (11) ein Laserstrahlgenerator ist.

7. Vorrichtung nach Anspruch 5 oder 6, dadurch **gekennzeichnet,** daß die Meßeinrichtungen (12, 13) Meßleisten sind, wobei jede aus einer Vielzahl von ausgerichteten Meßelementen, wie photoelektrischen Zellen oder Phototransistoren, aufgebaut ist.

8. Vorrichtung nach Anspruch 5 oder 7, dadurch **gekennzeichnet,** daß die Einrichtung zum Behandeln und Berechnen (2) ein Mikrorechner ist.

9. Vorrichtung nach einem der Ansprüche 5 bis 9, dadurch **gekennzeichnet,** daß die Erzeugereinrichtung (11), die Meßeinrichtung (13) und die Umwandlungseinrichtung (14) in einer Meßsonde (1) der Vorrichtung eingeschlossen sind.

10. Vorrichtung zum Berechnen der Größenverteilung von Teilchen in einem Fluidstrom (16) nach Anspruch 9, dadurch **gekennzeichnet,** daß die Meßsonde (1) weiterhin Einrichtungen (10, 172) zum Anzapfen eines Teiles des Stromes und zum Einleiten in die Sonde (1) und optische Reflektionseinrichtungen (15, 18, 19) zum Leiten des Lichtstrahles (111, 111a), welcher von der Erzeugereinrichtung (11) erzeugt ist, auf die Probe (17) und der Streustrahlung durch die Probe (17) auf die Meßeinrichtungen (12, 13) aufweist, wobei die Erzeugereinrichtung (11) und die Meßeinrichtungen (12, 13) sich entlang der Probe stromabwärts davon in Richtung des Stromes erstrecken, so daß der Sonde (1) eine vorbestimmte Form gegeben wird, welche die Strömung beim Analysieren in der Umgebung der Probe (17) nicht stört.

11. Vorrichtung nach Anspruch 10, dadurch **gekennzeichnet,** daß die Einrichtungen zum Anzapfen und Einleiten ein halbkreisförmiges Führungskreuz (172) und ein Ablenkteil (10), das mit einer Falle begrenzter Schichtdicke ausgestattet ist, aufweisen, wobei das Ablenkteil (10) in Wärmewiderstände (101) eingebettet ist, um die Einheitlichkeit seiner Form bei Temperaturänderungen sicherzustellen.

12. Vorrichtung nach Anspruch 10 oder 11, dadurch gekennzeichnet, daß die Leiteinrichtungen ebene Spiegel und/oder Totalreflektionsprismen (15, 18, 19) aufweisen.

**Claims**

1. Process for evaluating the size distribution of particles in a fluid from the measurement of scattered radiation along predetermined spacial directions ($d_1$ to $d_P$) in a finished integral number P by a sample of fluid (17) illuminated by an incident light beam (111a), characterized in that from a radiation measuring vector (Bm) having, as components, mean radiations ($bm_1$ to $bm_P$) along the P directions, determined after several successive measurements and from a matrix of theoretical radiation coefficients (U) is calculated a first estimation of the distribution expressed by a first discrete distribution function ($Fa_0$) contained in a mathematical envelope function ($\Sigma_J S_J(\phi)$) of predetermined type and respectively fixing concentration values at size nodes ($\phi_{11}$ to $\phi_{JN}$) for which said first function is defined, said size nodes ($\phi_{11}$ to $\phi_{JN}$) being distributed thereby satisfying a recursive relation ($\phi_{,j,n+1} = C\phi_{jn}$ and $\phi_{j+1,n} = C\phi_n$) of predetermined type, and in that this first function is taken as starting data to determine, by an iterative calculation involving digital filterings, an optimum recursive relation ($C_{opt}$) to which the nodes ($\phi_{11}$ to $\phi_{JN}$) of a discrete distribution function (F) should satisfy to be distributed whereby said discrete distribution function (F) offers a maximum correlation with a discrete measurement uncertainty function ($\sigma B.U^{-1}$) resulting from several successive radiation measurements in the P directions, all the discrete distribution functions (F) compatible with the measurement uncertainties ($\sigma B.U^{-1}$) and whose nodes ($\phi_{11}$ to $\phi_{JN}$) satisfy said optimum recursive relation ($C_{opt}$) being then calculated from the measuring vector (Bm) and from the matrix (U) thereby deducing an optimum statistical evaluation of the researched distribution.

2. Process according to claim 1, characterized in that the radiation coefficients ($u_{11}$ to $u_{PQ}$) of said matrix (U) are determined from the LORENZ-MIE theory.

3. Process according to claim 1 or 2, characterized in that said mathematical envelope function is a sum of B-spline type mathematical functions ($\Sigma a_j S_j(\phi)$).

4. Process according to claim 1 or 3, characterized in that said recursive relation links any two successive nodes ($\phi_{j,n+1}$, $\phi_{jn}$) of a discrete distribution function (F) by a multiplier coefficient.

5. Device for carrying out the process according to any one of claims 1 to 4, characterized in that it comprises

means (11) for producing a light beam designed to illuminate sample (17),

means (12, 13) for measuring the radiation scattered along the P spacial directions ($d_1$ to $d_P$),

means (14) for converting radiation measurements (ME) supplied from the measuring means (12, 13) in a digital form,

means (2) storing a program (23) and the theoretical radiation coefficient matrix (22) for processing the digital radiation measurements and for calculating said optimum statistical evaluation of the researched distribution, and

means (24) for displaying the calculated evaluation.

6. Device according to claim 5, characterized in that the producing means (11) are a laser beam generator.

7. Device according to claim 5 or 6, characterized in that the measuring means (12, 13) are measuring strips each having a plurality of aligned measuring members such as photosensitive cells or phototransistors.

8. Device according to claim 5 or 7, characterized in that said processing and calculating means (2) are a micro-computer.

9. Device according to any one of claims 5 to 9, characterized in that the producing means (11), the measuring means (13), and the converting means (14) are included in a measuring probe (1) in the device.

10. Device for evaluating the size distribution of particules in a flow of a fluid (16) according to claim 9, characterized in that said measuring probe (1) further comprises means (10, 172) for sampling a part of the flow and conveying it into the probe (1), and optical reflection means (15, 18, 19) for directing the light beam (111, 111a) produced by the producing means (11) to the sample (17) and the radiations scattered by the sample (17) to the measuring means (12, 13), the producing means (11) and the measuring means (12, 13) being remote from the sample, downstream from the sample in the direction of the flow, whereby the probe (1) has a predetermined form not disturbing the flow to be analyzed in the vicinity of the sample (17).

11. Device according to claim 10, characterized in that the sampling and conveying means comprise a semi-circular hollow guide (172) and a deflector (10) equipped with a limit layer trap, heating resistors (101) being sunk in said deflector (10) thereby ensuring integrity of its form during temperature variations.

12. Device according to claim 10 or 11, characterized in that the directing means comprises total reflection plane miroirs and/or prisms (15, 18, 19).

# FIG.1

GENERATEUR
DE FAISCEAU
LASER

SONDE DE MESURE

CONVERTISSEUR
ANALOGIQUE-
NUMERIQUE

MEMOIRE DE
COEFFICIENTS

MEMOIRE DE
PROGRAMME

UNITE
CENTRALE

VISUALISATION

MICRO-CALCULATEUR

# FIG.2

EP 0 300 875 B1

FIG.3

# FIG.4

EP 0 300 875 B1